Europäisches Patentamt

European Patent Office

Office européen des brevets

(19)

(11) Veröffentlichungsnummer : **0 534 996 B1**

(12) **EUROPÄISCHE PATENTSCHRIFT**

(45) Veröffentlichungstag der Patentschrift :
17.11.94 Patentblatt 94/46

(51) Int. Cl.⁵ : **G06F 15/70**

(21) Anmeldenummer : **91909474.8**

(22) Anmeldetag : **23.05.91**

(86) Internationale Anmeldenummer :
**PCT/DE91/00428**

(87) Internationale Veröffentlichungsnummer :
**WO 92/00569 09.01.92 Gazette 92/02**

(54) **VERFAHREN ZUR SEGMENTIERUNG BEWEGTER OBJEKTE DURCH HINTERGRUNDADAPTION MIT KOMPENSATION DER KAMERABEWEGUNG.**

(30) Priorität : **22.06.90 DE 4019978**

(43) Veröffentlichungstag der Anmeldung :
**07.04.93 Patentblatt 93/14**

(45) Bekanntmachung des Hinweises auf die
Patenterteilung :
**17.11.94 Patentblatt 94/46**

(84) Benannte Vertragsstaaten :
**DE FR GB**

(56) Entgegenhaltungen :
**SIGNAL PROCESSING, vol. 16, no. 3, March 1989, Amsterdam NL, pages 249-265. Michael Hoetter: "Differential estimation of the global motion parameters zoom and pan"**

(56) Entgegenhaltungen :
**IEEE TRANSACTIONS ON ACOUSTICS, SPEECH AND SIGNAL PROCESSING, vol. 37, no. 9, Sept. 1989, New York US, Pages 1454-1458. Tim J. Patterson et al.: "Detection algorithms for image sequence analysis" COMPUTER VISION GRAPHICS AND IMAGE PROCESSING, vol. 21, no. 2, Feb. 1983, New York US, pages 169-204: John Stuller et al.: "Kalman filter formulation of low-level television image motion estimation" PROCEEDINGS OF THE 6TH SCANDINAVIAN CONFERENCE ON IMAGE ANALYSIS, June 1989, Oulu, Finland, pages 1051-1058: K.P. Karman et al.: "Detection and tracking of moving objects by adaptative background extraction"**

(73) Patentinhaber : **SIEMENS AKTIENGESELLSCHAFT Wittelsbacherplatz 2 D-80333 München (DE)**

(72) Erfinder : **VON BRANDT, Achim Am Eschbichl 7a D-8000 München 81 (DE)**

EP 0 534 996 B1

**Beschreibung**

Verfahren zur Segmentierung bewegter Objekte durch Hintergrundadaption mit Kompensation der Kamerabewegung

Für die videogestützte Bewegtobjektdetektion, z.B. zum Zwecke der Verkehrsüberwachung oder des Objektschutzes sowie für viele andere Aufgaben aus der Bildverarbeitung werden vorzugsweise Bildsequenzen verwendet, die mit einer stationären, d.h. ortsfesten und idealerweise unbewegten Kamera aufgenommen wurden. Falls die Kamera tatsächlich völlig in Ruhe ist, ergibt sich hierbei die wünschenswerte Situation, daß unbewegte Objekte in der aufzunehmenden Szene auch in der Bildebene in Ruhe sind, so daß nur solche Objekte, die eine Eigenbewegung durchführen, wie z.B. sich bewegende Fahrzeuge und Personen, Bewegungen im Bild verursachen. Verfahren zur Bewegtobjektdetektion setzen in der Regel eine solche in Ruhe befindliche Kamera voraus (KaBr-89). Ein solches Verfahren ist aus der Veröffentlichung von K.-P. Karmann und A. v. Brandt, "Detection and tracking of moving objects by adaptive background extraction", Proc. of the 6th Scand. Conf. on Image Analysis, Oulu, Finland, June 19 - 22, 1989, bekannt. Bei diesem Verfahren wird eine Folge von Referenzbildern aus einer Eingangsbildfolge geschätzt, in der ein ruhender Hintergrund hinter bewegten Objekten sichtbar ist. Bei diesem Verfahren wird ein zweidimensionales Kalman-Filter zur Schätzung der Intensitäten der Referenzbildfolge verwendet.

In der Realität kann aber eine solche völlige Ruhigstellung der Kamera nicht immer erzielt werden. Insbesondere in Außenaufnahmen unterliegt die Kamera häufig mechanischen Störkräften, wie z.B. Windkräften. In der Verkehrsüberwachung z.B. sind die Kameras häufig auf hohen Masten befestigt, so daß Schwingungen der Kamera nicht auszuschließen sind. Durch diese Kamerabewegungen ergeben sich globale Verschiebungen und Verdrehungen des Bildinhalts während der Aufzeichnung einer Bildfolge. Diese Verzerrungen sind bei Anwendung einer großen Brennweite wegen der damit einhergehenden Vergrößerung (Zoom) besonders ausgeprägt. Sie können bei den üblichen Verfahren zur Bewegtobjekterkennung zu Fehldetektionen führen und verursachen bei einer Filterung in Zeitrichtung (etwa zur Rauschunterdrückung) Unschärfen.

Kalman-Filter werden seit einiger Zeit auch zu Zwecken der Bewegungsschätzung verwendet. So ist z. B. in der Veröffentlichung von John Stuller und Coplan Krishnamurthy "Kalman Filter Formulation of Low-Level Television and Image Motion Estimation, Computer Vision, Graphics and Image Processing 21, 169 - 204 (1983) ein Verfahren zur Schätzung von Bewegungsvektorfeldern mit Hilfe von Kalman-Filtern beschrieben. Derartige Verfahren sind grundsätzlich zur Segmentierung bewegter Objekte auch bei bewegter Kamera anwendbar. Sie sind jedoch auf sehr allgemeine Kamerabewegungen anwendbar und damit für die in dieser Patentanmeldung in Angriff genommene Aufgabenstellung nicht optimal geeignet.

Um auch bei Vorhandensein dieser störenden Kamerabewegungen Verfahren zur Bildfolgenanalyse einsetzen zu können, die zunächst eine in Ruhe befindliche Kamera voraussetzen, müssen die durch die Kamerabewegungen verursachten Verzerrungen des Bildinhalts durch Bewegungsschätzverfahren erkannt und auf elektronischem Wege möglichst weitgehend rückgängig gemacht (kompensiert) werden.

Die der Erfindung zugrundeliegende Aufgabe besteht darin, ein Verfahren anzugeben, mit dem eine Segmentierung bewegter Objekte mit Hilfe einer Hintergrundadaption auch dann durchgeführt werden kann, wenn die Kamera nicht gänzlich in Ruhe ist, sondern durch das Vorhandensein von Störungen bewegt wird. Diese Aufgabe wird durch ein Verfahren zur Segmentierung bewegter Objekte durch Hintergrundadaption mit Kompensation der Kamerabewegung gemäß den in Anspruch 1 angegebenen Merkmalen gelöst.

Das erfindungsgemäße Verfahren ermittelt Verschiebungsvektoren auf einem vorgegebenen örtlichen Raster durch Vergleich des aktuellen Bildes mit einem stillstehenden oder sich nur langsam bewegenden Referenzbild, welches vorzugsweise ein rekursiv berechnetes Hintergrundbild ist. Dabei wird Vorwissen über das erwartete Verschiebungsvektorfeld verwendet, welches aus den vorherigen Bildern der Szene gewonnen wurde.

Das auf diese Weise gefundene im allgemeinen dünn besetzte (d.h. nicht für alle Bildpunkte definierte) Verschiebungsvektorfeld wird in einen Satz von Basisvektorfeldern zerlegt, wovon einige der Kamerarotation, andere der Kameratranslation entsprechen. Für den Entwurf der der Translation entsprechenden Basisbewegungsvektorfelder wird ein apriori bekanntes Modell des Geländeverlaufs in der vorliegenden Szene verwendet.

Der dynamische Prozeß, welcher die Kamerapositionsdaten und damit die Verschiebungsvektoren hervorbringt, wird als linearer autoregressiver stochastischer Prozeß modelliert. Dieser soll insbesondere in der Lage sein, oszillatorische Kamerabewegungen zu generieren. Als Konsequenz dieser Modellannahme wird ein Kalman-Filter (Lewi86) zur Ermittlung der Kameraparameter verwendet.

Zur Optimierung der in obigem Kalman-Filter, mit welchem die Kameraparameter geschätzt und vorhergesagt werden, verwendeten Systemparameter, wird eine weitere rekursive Schätzmethode z.B. ein weiteres Kalman-Filter oder der LMS-Algorithmus (Stro90) verwendet.

Zur Kompensation der Kamerabewegung mit Hilfe der ermittelten Kameraparameter wird ein bewegungskompensiertes Hintergrundbild berechnet. Durch Vergleich der laufenden Bilder mit diesen Hintergrundbildern können bewegte Objekte in bekannter Weise detektiert und segmentiert werden.

Das Verfahren ist auf Szenen mit langsamem Schwenk, Zoom oder Rotation erweiterbar. Im allgemeinen können hochfrequente Kamerabewegungen eliminiert und niederfrequente beibehalten werden. Das Hintergrundbild wird dann nicht mehr als stillstehend angenommen, sondern unterliegt langsamen Bewegungen.

Weiterbildungen der Erfindung ergeben sich aus den Unteransprüchen.

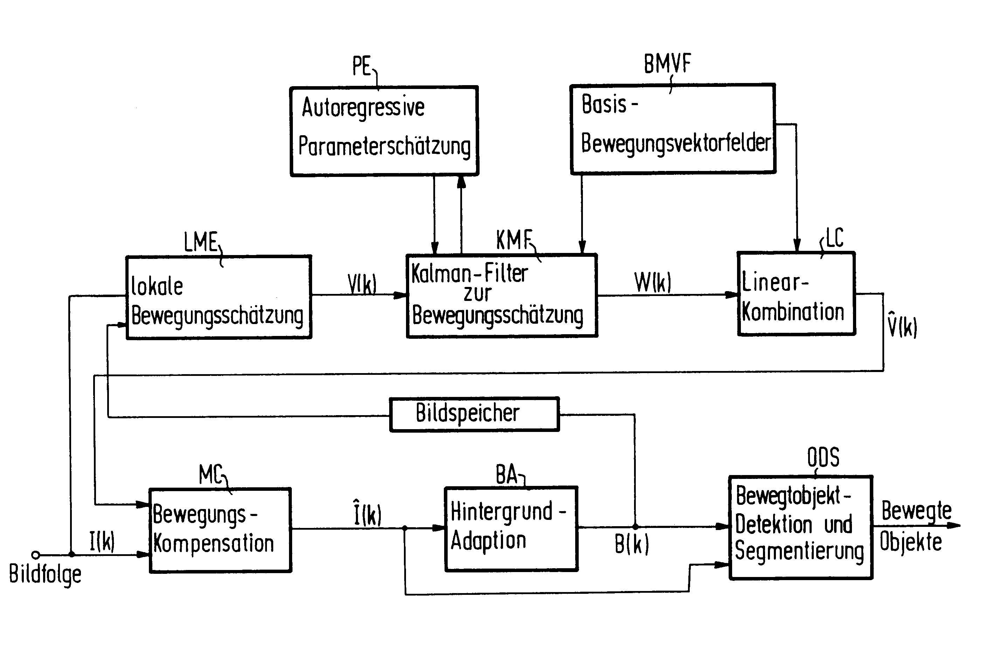

Figur 1 zeigt einen Ablaufplan zur Segmentierung bewegter Objekte durch Hintergrundadaption mit Kompensation der Kamerabewegung. Durch Vergleich zweier Bilder I und B werden für Bildpunkte auf einem vorgegebenen örtlichen Raster Verschiebungsvektoren V ermittelt (LME). Diese Verschiebungsvektoren V werden einem ersten Kalman-Filter (KMF) zur Schätzung der Kamerabewegung als Meßgrößen zugeführt, welches Zustandsgrößen w zur Beschreibung der Kamerabewegung berechnet. Aus diesen Zustandsgrößen w und aufgrund vorgegebener Basisbewegungsvektorfelder (BMVF) werden durch Linearkombination (LC) korrigierte Bewegungsvektorfelder $\hat{V}$ berechnet. Aus diesen korrigierten Bewegungsvektorfeldern $\hat{V}$ und aus den Bildern I der ursprünglichen Folge werden durch Bewegungskompensation (MC) bewegungskompensierte Bilder $\hat{I}$ berechnet. Aus diesen bewegungskompensierten Bildern $\hat{I}$ wird durch Hintergrundadaption (BA) eine Folge von Referenzbildern B berechnet, welche nach Verzögerung mit Hilfe eines Bildspeichers zur Ermittlung der Verschiebungsvektoren (LME) beim nächsten Zeitschritt verwendet werden kann. Durch Vergleich der bewegungskompensierten Bilder $\hat{I}$ mit den Referenzbildern B werden bewegte Objekte in den Bildern I detektiert und segmentiert (ODS).

Gegeben sei eine Bildfolge (I(k),k=o,l,...), wobei jedes Bild I(k) aus Bildpunkten I(k,p) besteht, und wobei p=(px,py) der zweidimensionale Koordinatenvektor für Bildpunkte ist. Es sei angenommen, daß diese Bildfolge Störungen durch Kamerabewegungen (Verwackeln) enthält. Ziel des erfindungsgemäßen Verfahrens ist es, diese Störungen zu beseitigen, d.h. die Bildfolge I(k) in eine neue unverwackelte Bildfolge $\hat{I}$(k) zu überführen. Gleichzeitig wird eine Folge von Hintergrundbildern (B(k),k=O,l...), bestehend aus den Bildpunkten B(k,p), erzeugt.

Die lokale Bewegungsschätzung (LME) hat die Aufgabe für einige Bildpunktkoordinaten p lokale Verschiebungsvektoren durch Vergleich zwischen dem aktuellen Bild I(k) und dem vorhergesagten Hintergrundbild B(k) zu bestimmen. Die hierfür ausgewählten Bildpunkte p sollten zur Unterdrückung von Störungen in solchen Bildbereichen liegen, in denen keine Bewegtobjekte erwartet werden. Dabei wird neben den Bildern I und B Vorwissen in Form vorhergesagter Bewegungsvektoren v(k,p) und der zugehörigen Kovarianzmatrix oder einer anderen Größe, die die Zuverlässigkeit dieser Vorhersage zum Ausdruck bringt, verwendet. Hierfür kann z.B. ein Vergleich zwischen den Bildinhalten des gegebenen Bildes I(k) und des vorhergesagten Hintergrundbildes B(k) auf Bildpunktebene vorgenommen werden, indem eine vorgegebene Kostenfunktion minimiert wird. Diese kann z.B. durch die Formel

$$(1) \quad D(p,v) = \sum_{x,y} wf(x-px,y-py) \cdot |B(k;x,y)-I(k;x-vx,y-vy)|$$

gegeben sein, wobei (p = px, py) ein Punkt in der Bildebene und v = (vx,vy) eine Verschiebung in der Bildebene sei, und wf eine vorgegebene Fensterfunktion ist. Im einfachsten Fall ist wf gleich 1 innerhalb eines rechteckigen Bereichs mit den Abmessungen Lx bzw. Ly , also

$$(2) \quad wf(x,y) = \begin{cases} 1 & \text{falls} \quad |x| < Lx \quad \text{und} \quad |y| < Ly \\ 0 & \text{sonst} \end{cases}$$

Eine erste Näherung für die am Ort p vorhandene Verschiebung v(k,p) liefert die Minimierung von D(p,v). Durch Messung der Krümmung von D(p,v) in der Nähe des Minimums erhält man ein Maß für die Varianz dieser gemessenen Verschiebung. Alle auf diese Weise, also durch Minimierung der Kostenfunktion D gemessenen Verschiebungsvektoren V(k,p), die zum Zeitpunkt k gehören, werden in einem Verschiebungsvektorfeld V(k) zusammengefaßt.

Dieses Verschiebungsvektorfeld V(k) wird einem Kalman-Filter als Meßgröße zugeführt, welches eine zeitliche Folge von Kamerazustandsvektoren w(k) berechnet, von denen jeder aus den skalaren Koeffizienten w(i;k), i=l,..., nB
(vorzugsweise nB = 6) und deren zeitlichen Vorläufern besteht. Diese Koeffizienten w(i;k) bringen die durch die momentane Abweichung der Kameraposition von der Ruhelage verursachte Verzerrung des gegebenen Bildes I(k) zum Ausdruck. Das Prinzip des Kalman-Filters ist in (Lewi86) erläutert. Die Meßmatrix H dieses Kalman-Filters besteht aus nB Basisvektorbewegungsfeldern, die zum Ausdruck bringen, wie die Koeffizienten w(i;k), i=l, ..., nB sich auf das meßbare Bewegungsvektorfeld V(k) auswirken. Die Systemrauschkovarianzmatrix Q dieses Kalman-Filters wird am einfachsten durch eine Diagonalmatrix mit konstanten Werten realisiert.

Die Meßrauschkovarianzmatrix R muß dagegen zum Ausdruck bringen, wie stark das Meßrauschen in den gemessenen und zum Meßvektor zusammengefaßten N Verschiebungsvektoren (V(i,k) =(u(i,k),v(i,k)), i=l ... N) eingeschätzt wird. Die Elemente der Meßrauschkovarianzmatrix werden in geeigneter Weise bei der lokalen Bewegungsschätzung (LME) mitberechnet. Falls Unabhängigkeit des Meßrauschens in den einzelnen Meßgrößen angenommen wird, ist auch R eine Diagonalmatrix, deren Einträge aber die veränderlichen Varianzen der Meßgrößen sind. Diese Varianzen können auch in der Weise quantisiert werden, daß nur zwischen brauchbaren und unbrauchbaren Meßwerten unterschieden wird, ohne weitere Abstufungen, wodurch sich die Rechnungen vereinfachen.

Das Kalman-Filter zur Schätzung des Kamerazustandsvektors w(k) führt u.a. eine Vorhersage jedes Zustandsvektors $\tilde{w}$(k) durch den vorherigen Zustandsvektor $\hat{w}$(k-l) durch. Hierfür benötigt das Kalman-Filter eine Systemübergangsmatrix A (Lewi86). Die Parameter dieser Matrix werden während des Betriebs des erfindungsgemäßen Verfahrens laufend adaptiert. Dies geschieht mit Hilfe einer autoregressiven Parameterschätzung (PE). Zur Beschreibung dieser autoregressiven Parameterschätzung (PE) nehmen wir zunächst an, daß zur Vorhersage der Kameraparameter ein linearer Prädiktor höchstens zweiter Ordnung verwendet wird, bei dem also die Kameraparameter zur Zeit k durch höchstens zwei zeitliche Vorläufer ihrer selbst vorhergesagt werden. Außerdem sei eine Prädiktion des Kameraparameters $\tilde{w}$(i;k) durch die Kameraparameter $\hat{w}$(j;k-1) bzw. $\hat{w}$(j;k-2) mit i ungleich j ausgeschlossen. Die Vorhersagegleichung des Prädiktors lautet dann:

$$(3) \quad \tilde{w}(i;k+1) = \sum_{t=0}^{1} a(i;t,k) \cdot \hat{w}(i;\ k-t)$$

Nach dem Korrekturschritt (Measurement update) des Kalman-Filters liegt ein korrigierter Schätzwert $\hat{w}$(i,k+l) vor und damit der Prädiktionsfehler

$$(4) \quad e(i;k+l) = \hat{w}(i;k+l) - \tilde{w}(i;k+l)$$

Hiermit kann eine Anpassung der Prädiktorkoeffizienten (d.h. der Matrixelemente der Systemübergangsmatrix A) mit Hilfe des LMS-Algorithmus (s.z.B. (Stro90)) vorgenommen werden

$$(5) \quad a(i;t,k+l) = a(i;t,k) + \mu \cdot \tilde{w}(i;k-t) \cdot e(i;k+l)$$

Als Alternative zum LMS-Algorithmus ist auch die Anwendung eines weiteren Kalman-Filters zur Schätzung der Prädiktor-Koeffizienten möglich. Die Prädiktorkoeffizienten ändern sich aber im allgemeinen nur langsam, so daß die Adaptionsfähigkeit des LMS-Algorithmus ausreichen sollte.

Um aus den vorhergesagten und korrigierten Zustandsparametern der Kamera korrigierte Bewegungsvektorfelder berechnen zu können, mit denen aus der ursprünglichen Bildfolge eine bewegungskompensierte Bildfolge berechnet werden kann, werden Basisbewegungsvektorfelder benötigt, welche zu Beginn des Verfahrens, ggf. unter Berücksichtigung eines Geländemodells, entworfen werden. Es werden bis zu sechs Basisvektorfelder benötigt. Interpretiert man die ersten drei Komponenten w(i;k),i = 1,2,3 des Kamerazustandsvektors als drei kartesische Komponenten $\omega x$, $\omega y$, $\omega z$ einer Rotationsgeschwindigkeit der Kamera um die Koordinatenachsen der Bildebene bzw. um die optische Achse und weitere drei Komponenten w(i;k),i = 4,5,6 des Kamerazustandsvektors als Translationsgeschwindigkeiten tx, ty, tz in Richtung der Koordinatenachsen der Bildebene bzw. in Richtung der optischen Achse, dann ergeben sich gemäß der Darstellung des zweidimensionalen Verschiebungsvektorfeldes V (x,y) = (u,v) nach (Heel 88)

$$(6) \quad u = \frac{-tx + x \cdot tz}{Z} + \omega x \cdot xy - \omega y \cdot (x^2 + 1) + \omega z \cdot y$$

$$v = \frac{-ty + y \cdot tz}{Z} - \omega y \cdot xy + \omega x \cdot (y^2 + 1) - \omega z \cdot x$$

die sechs Basisbewegungsvektorfelder zu

$$\begin{array}{ll} & w(1;x,y) = (xy, y^2+1)^T \qquad\qquad w(4;x,y) = (-1/Z, \; 0)^T \\ (7) & w(2;x,y) = (-(x^2+1), -xy)^T \quad (7a) \quad w(5;x,y) = (0, -1/Z)^T \\ & w(3;x,y) = (y, \; -x)^T \qquad\qquad\quad w(6;x,y) = (x/Z, y/Z)^T \end{array}$$

Man sieht, daß für die Kamerarotation (Basisvektorfelder Nr. 1 bis 3) der Geländeverlauf, der in $Z(x,y)$ zum Ausdruck kommt, keine Rolle spielt. Daher sind diese Basisbewegungsvektorfelder bei jeder Szene sofort anwendbar.

Bei translatorischen Kamerabewegungen ist theoretisch die Messung des Geländeverlaufs erforderlich. Sehr häufig kann man aber diesen dadurch annähern, daß man annimmt, die Entfernung der Gegenstände von der Kamera würde umgekehrt proportional zur Bildhöhe abnehmen, d.h. $Z(x,y) = l/y$. Dann erhält man für die drei translationsbedingten Basisbewegungsvektorfelder statt der Gleichungen (7a) die einfachen Formeln

$$(8) \quad \begin{array}{l} w(4; \; x,y) = (-y, 0)^T \\ w(5; \; x,y) = (0, -y)^T \\ w(6; \; x,y) = (xy, y^2)^T \end{array}$$

Die durch die Gleichungen (7) u.(8) definierten Basisbewegungsvektorfelder stellen also zu Vektorfeldern zusammengefaßt ein einfaches weitgehend szenenunabhängiges System von Basisbewegungsvektorfeldern dar, das den Zusammenhang zwischen den sechs Kameraparametern und den Verschiebungen des Bildinhalts angibt.

Die für die Kalman-Filterung zur Vorhersage der Kameraparameter benötigte Meßmatrix H besteht dann aus sechs Spalten, die die Basisbewegungsvektorfelder enthalten (jeweils die u-und v-Komponente der Vektoren nacheinander). Es brauchen nur diejenigen Vektoren in H enthalten zu sein, für die auch entsprechende gemessene Vektoren vorliegen.

In einer vereinfachten Verfahrensversion werden nur die drei Basisbewegungsvektorfelder nach den Gleichungen (7) verwendet, da Kamerarotationen weitaus größere Auswirkungen haben als Kameratranslationen und daher letztere vernachlässigt werden können.

Mit Hilfe der berechneten Kamerabewegungsparameter w(k) und der Basisbewegungsvektorfelder w(i;x,y) wird nun durch lineare Überlagerung der Basisbewegungsvektorfelder mit Hilfe der Kameraparameter ein korrigiertes Bewegungsvektorfeld

$$(a) \quad \hat{V}(k;x,y) = \sum_i \hat{w}(i;k) \cdot w(i; \; x,y)$$

berechnet (LC), mit dessen Hilfe das ursprüngliche Bild $I(k)$ in ein bewegungskompensiertes Bild $\hat{I}(k)$ transformiert wird (Bewegungskompensation, MC,), das überall dort, wo der Hintergrund im Bild $I(k)$ sichtbar ist, deckungsgleich zum vorhergesagten Hintergrundbild $B(k)$ passen sollte. Für eine optimale Bewegungskompensation ist eine Interpolation des Bildes auf Subpixel-Genauigkeit, z.B. durch bilineare Interpolation, erforderlich, damit auch Verschiebungen um Bruchteile von Bildpunktabständen realisiert werden können.

Bilineare Interpolation und Bewegungskompensation laufen dabei wie folgt ab:
Das bewegungskompensierte Bild $\hat{I}(k)$ wird mit Hilfe des korrigierten Verschiebungsvektorfeldes $\hat{V}(k)$ aus dem ursprünglichen Bild I(k) nach der Formel

$$(10) \qquad I(k;p) = I(k;p - \hat{V}(k))$$

erzeugt. Dabei ergibt sich die Schwierigkeit, daß die Koordinaten p - $\hat{V}$ (k) im allgemeinen keinem Punkt auf dem Bildpunktraster des Bildes I(k) entsprechen, da sie im allgemeinen nicht ganzzahlige Vielfache einer Gitterbasis sind, sondern vielmehr zwischen vier Bildpunkten des Bildpunktrasters liegen. Deshalb ist die rechte Seite der Gleichung (10) im allgemeinen nicht definiert und wird durch den Ausdruck

$$
\tilde{I}(k, p - \hat{V}(k)) = (1-rx)(1-ry) \quad . \; I(k;ix,iy)
$$
$$
+ \quad rx \; . \; (1-ry) \; . \; I(k;ix+1,iy)
$$
$$
(11) \qquad + (1-rx) \; . \; ry \quad . \; I(k;ix,iy+1)
$$
$$
+ \quad rx \quad . \; ry \quad . \; I(k;ix+1,iy+1)
$$

ersetzt, wobei

$$
(12) \qquad
\begin{aligned}
ix &= \text{int} \; ((p - \hat{V}(k))x) \\
iy &= \text{int} \; ((p - \hat{V}(k))y) \\
rx &= x - ix \\
ry &= y - iy
\end{aligned}
$$

ist, und int( ) den ganzzahligen Anteil bezeichnet.

Der interpolierte Wert I wird also als gewichtetes Mittel aus den vier Nachbarpunkten des Bildpunktes p - $\hat{V}$ (k) gebildet, wobei die Gewichtsfaktoren linear von den Rundungsfehlern rx, ry abhängen. Die bilineare Interpolation ist separierbar und kann zur Aufwandsreduktion durch zwei eindimensionale Interpolationsschritte (in Zeilen- bzw. Spaltenrichtung) durchgeführt werden.

In der letzten Stufe des Verfahrens wird nun das bewegungskompensierte Bild $\hat{I}(k)$ zur Berechung eines Referenzbildes mit Hilfe der Methode der Hintergrundadaption verwendet. Hierzu kann z.B. das in ( KaBr89) beschriebene Verfahren zur Detektion bewegter Objekte durch adaptive Hintergrundextraktion verwendet werden.

Literaturliste

(KaBr89) K.-P.Karmann, A.v.Brandt, "Detection and tracking of moving objects by adaptive background extraction", Proc. 6th Scand. Conf. on Image Analysis, Oulu, Finland, June 19-22, 1989, pp. 1051 - 1058

(Lewi86) L.Lewis, Optimal Estimation, Wiley 1986

(Stro90) P.Strobach, Linear Prediction Theory, Springer 1990

(Heel88) J.Heel, "Dynamical Systems and Motion Vision", AI Memo 1037, MIT Artificial Intelligence Laboratory, 1988

**Patentansprüche**

1. Verfahren zur Segmentierung bewegter Objekte auf von einer Kamera aufgenommenen Bildern durch Hintergrundadaption mit Kompensation der Kamerabewegung,
   bei dem
   a) Verschiebungsvektoren (V) durch Vergleich zweier nacheinander aufgenommener Bilder für Bildpunkte auf einem vorgegebenen örtlichen Raster ermittelt werden,
   b) die so ermittelten Verschiebungsvektoren (V) einem ersten Kalman-Filter (KMF) zur Schätzung der Kamerabewegung als Meßgrößen zugeführt werden,
   c) mit Hilfe dieses ersten Kalman-Filters Zustandsgrößen (w) berechnet werden, die den Bewegungszustand der Kamera beschreiben,
   d) aufgrund vorgegebener Basis-Bewegungsvektorfelder (BMVF) aus den Zustandsgrößen korrigierte

Bewegungsvektorfelder ($\hat{V}$) berechnet werden,

e) anhand dieser korrigierten Bewegungsvektorfelder ($\hat{V}$) eine bewegungskompensierte Bildfolge ($\hat{I}$) berechnet wird,

f) aus der bewegungskompensierten Bildfolge ($\hat{I}$) eine Folge von Referenzbildern (B) berechnet wird, und

g) bewegte Objekte durch Vergleich eines bewegungskompensierten Bildes ($\hat{I}$) mit einem Referenzbild (B) segmentiert werden.

2. Verfahren nach Anspruch 1,
dadurch **gekennzeichnet**,
daß zur Ermittlung der Verschiebungsvektoren ein von einer Kamera aufgenommenes Bild mit einem Referenzbild verglichen wird.

3. Verfahren nach einem der vorhergehenden Ansprüche,
dadurch **gekennzeichnet**,
daß der Vergleich durch Minimierung einer Abstandsfunktion durchgeführt wird.

4. Verfahren nach Anspruch 3,
dadurch **gekennzeichnet**,
daß die Krümmung der Abstandsfunktion im Minimum gemessen und als Maß für die Varianz der gemessenen Verschiebung verwendet wird.

5. Verfahren nach Anspruch 4,
dadurch **gekennzeichnet**,
daß die Krümmung der Abstandsfunktion zur Berechnung der Meßrauschkovarianz des ersten Kalman Filters verwendet wird.

6. Verfahren nach Anspruch 3,
dadurch **gekennzeichnet**,
daß die Abstandsfunktion nach der Formel

$$D(p,v) = \sum_{x,y} wf(x-px, y-py) \, |(B(k;x,y)-I(k;x-vx,y-vy))|$$

gebildet wird, wobei x bzw. y Koordinaten von Bildpunkten sind und
D(p,v) die von einem Verschiebungsvektor v = (vx, vy) abhängige Abstandsfunktion im Bildpunkt p=(px, py),
B(k;x,y) die Intensität des Referenzbildes zur Zeit k im Bildpunkt (x,y),
I(k;x,y) die Intensität des von der Kamera aufgenommenen Bildes zur Zeit k im Bildpunkt (x,y), und
wf(x,y) eine vorgegebene Fensterfunktion ist.

7. Verfahren nach Anspurch 6,
dadurch **gekennzeichnet**,
daß die Fensterfunktion durch

$$wf(x,y) = \begin{cases} 1 & \text{falls} \quad |x| < Lx \quad \text{und} \quad |y| < Ly \\ 0 & \text{sonst} \end{cases}$$

gegeben ist, wobei Lx bzw. Ly die Abmessungen eines rechteckigen Bereiches der Bildebene sind.

8. Verfahren nach einem der vorhergehenden Ansprüche,
dadurch **gekennzeichnet**,
daß solche Parameter des ersten Kalman-Filters, welche die dem Filter zugrundeliegende Systemdyna-

7

mik beschreiben, während des Verfahrens laufend mit Hilfe einer autoregressiven Parameterschätzung adaptiert werden.

9. Verfahren nach Anspruch 8,
dadurch **gekennzeichnet**,
daß die Adaption der Systemparameter des ersten Kalman-Filters mit Hilfe des LMS-Algorithmus vorgenommen wird, wobei als zu minimierender Prädiktionsfehler eine Norm der Differenz zwischen vorhergesagten und korrigierten Zustandsgrößen gewählt wird.

10. Verfahren nach Anspruch 8,
dadurch **gekennzeichnet**,
daß die Adaption der Systemparameter des ersten Kalman-Filters mit Hilfe eines zweiten Kalman-Filters zur Schätzung der Systemparameter vorgenommen wird.

11. Verfahren nach einem der vorhergehenden Ansprüche,
dadurch **gekennzeichnet**,
daß die Zustandsgrößen die Rotationsbewegungen der Kamera beschreiben.

12. Verfahren nach Anspruch 11,
dadurch **gekennzeichnet**,
daß die Zustandsgrößen auch die Translationsbewegung der Kamera beschreiben.

13. Verfahren nach Anspruch 11,
dadurch **gekennzeichnet**,
daß die Zustandsgrößen den Winkelgeschwindigkeiten der Kamera bezogen auf drei Achsen entsprechen, von denen zwei mit den Koordinatenachsen der Bildebene identisch sind und die dritte Achse der optischen Achse der Kamera entspricht.

14. Verfahren nach Anspruch 12,
dadurch **gekennzeichnet**,
daß die Zustandsgrößen den Winkelgeschwindigkeiten bezogen auf drei Achsen und den Translationsgeschwindigkeiten in Richtung dieser drei Achsen entsprechen, wobei zwei Achsen mit den Koordinatenachsen der Bildebene identisch sind, und die dritte Achse der optischen Achse der Kamera entspricht.

15. Verfahren nach Anspruch 13,
dadurch **gekennzeichnet**,
daß als Basis-Bewegungsvektorfelder die drei Vektorfelder
$$w(1;x,y) = (xy, y^2 + l)^T$$
$$w(2;x,y) = (-(x^2 + l), -xy)^T$$
und
$$w(3;x,y) = (y, -x)^T$$
verwendet werden, wobei x bzw. y die Koordinaten von Punkten in der Bildebene sind.

16. Verfahren nach Anspruch 14,
dadurch **gekennzeichnet**,
daß als Basis-Bewegungsvektorfelder die sechs Vektorfelder
$$w(1;x,y) = (xy, y^2 + l)^T$$
$$w(2;x,y) = (-(x^2 + l), -xy)^T$$
$$w(3;x,y) = (y, -x)^T$$
$$w(4;x,y) = (-1/Z(x,y),0)^T$$
$$w(5;x,y) = (0, -1/Z(x,y))^T$$
$$w(6;x,y) = (x/Z(x,y),y/Z(x,y))^T$$
verwendet werden, wobei x bzw. y die Koordinaten von Punkten in der Bildebene sind und Z (x,y) die Gegenstandsweite eines auf den Bildpunkt (x,y) abgebildeten Objekts bezeichnet.

17. Verfahren nach Anspruch 16,
dadurch **gekennzeichnet**,
daß für die Gegenstandsweite Z(x,y) die vereinfachende Annahme

$$Z(x,y) = \frac{1}{y}$$

gemacht wird, wobei x bzw. y die Koordinaten von Punkten in der Bildebene bezeichnen.

**18.** Verfahren nach Anspruch 1,
dadurch **gekennzeichnet**,
daß die korrigierten Bewegungsvektorfelder aus den Basis-bewegungsvektorfeldern und den Zustands-größen nach der Formel

$$\hat{V}(k;x,y) = \sum_{i=1}^{n} \hat{w}(i;k) \cdot w(i;x,y)$$

berechnet werden, wobei n die Zahl der Basis-Bewegungsvektorfelder ist und
$\hat{V}(k;x,y)$      der korrigierte Bewegungsvektor zur Zeit k im Bildpunkt (x,y),
w(i;k)      die i-te Komponente des Zustandsvektors zur Zeit k, und
w(i;x,y)      das i-te Basis-Bewegungsvektorfeld im Bildpunkt (x,y) bezeichnet.

**19.** Verfahren nach einem der vorhergehenden Ansprüche,
dadurch **gekennzeichnet**,
daß anhand der korrigierten Bewegungsvektorfelder aus der Folge der von der Kamera aufgenommenen Bilder eine bewegungskompensierte Bildfolge berechnet wird, z.B. mit Hilfe der bilinearen Interpolation.

**20.** Verfahren nach einem der vorhergehenden Ansprüche,
dadurch **gekennzeichnet**,
daß aus der bewegungskompensierten Bildfolge durch zeitrekursive Mittelung, z.B. mit Hilfe weiterer Kalman-Filter, eine Folge von Referenzbildern berechnet wird.

## Claims

**1.** Process for segmenting moving objects on images recorded by a camera by background adaptation with compensation for the camera movement,
in which

a) displacement vectors (V) are determined by comparison of two successively recorded images for pixels on a predetermined spatial raster,

b) the displacement vectors (V) determined in this way are fed to a first Kalman filter (KMF) for estimating the camera movement as measured variables,

c) with the aid of this first Kalman filter, state variables (w) are computed which describe the state of movement of the camera,

d) on the basis of predetermined base movement vector fields (BMVF), corrected movement vector fields ($\hat{V}$) are computed from the state variables,

e) a movement-compensated image sequence ($\hat{I}$) is computed with reference to these corrected movement vector fields ($\hat{V}$),

f) a sequence of reference images (B) is computed from the movement-compensated image sequence ($\hat{I}$), and

g) moving objects are segmented by comparison of a movement-compensated image ($\hat{I}$) with a reference image (B).

**2.** Process according to Claim 1, characterized in that, to determine the displacement vectors, an image recorded by a camera is compared with a reference image.

**3.** Process according to one of the preceding claims, characterized in that the comparison is carried out by minimization of a spacing function.

**4.** Process according to Claim 3, characterized in that the curvature of the spacing function is measured at the minimum and is used as a measure for the variance of the measured displacement.

5. Process according to Claim 4, characterized in that the curvature of the spacing function is used for the computation of the measurement noise covariance of the first Kalman filter.

6. Process according to Claim 3, characterized in that the spacing function is formed in accordance with the formula

$$D(p,v) = \sum_{x,y} wf(x-px, y-py) \; |(B(k;x,y)-I(k;x-vx,y-vy))|$$

where x and y are coordinates of pixels and
D(p,v) is the spacing function dependent upon a displacement vector v = (vx, vy) at the pixel p = (px, py),
B(k;x,y) is the intensity of the reference image at the time k in the pixel (x,y),
I(k;x,y) is the intensity of the image recorded by the camera at the time k in the pixel (x,y), and
wf(x,y) is a predetermined window function.

7. Process according to Claim 6, characterized in that the window function is given by

$$wf\;(x,y) \;=\; \begin{cases} 1 \;\; if \;\; |x| \; < \; Lx \; and \;\; |y| \; < \; Ly \\[2mm] 0 \; otherwise \end{cases}$$

where Lx and Ly are the dimensions of a rectangular region of the image plane.

8. Process according to one of the preceding claims, characterized in that those parameters of the first Kalman filter which describe the system dynamics on which the filter is based are continuously adapted, during the process, with the aid of autoregressive parameter estimation.

9. Process according to Claim 8, characterized in that the adaptation of the system parameters of the first Kalman filter is undertaken with the aid of the LMS algorithm, a norm of the difference between predicted and corrected state variables being selected as the prediction error to be minimized.

10. Process according to Claim 8, characterized in that the adaptation of the system parameters of the first Kalman filter is undertaken with the aid of a second Kalman filter for estimating the system parameters.

11. Process according to one of the preceding claims, characterized in that the state variables describe the rotational movements of the camera.

12. Process according to Claim 11, characterized in that the state variables also describe the translational movement of the camera.

13. Process according to Claim 11, characterized in that the state variables correspond to the angular velocities of the camera, related to three axes, two of which are identical with the coordinate axes of the image plane and the third axis corresponding to the optical axis of the camera.

14. Process according to Claim 12, characterized in that the state variables correspond to the angular velocities related to three axes and the translational velocities in the direction of these three axes, two axes being identical with the coordinate axes of the image plane and the third axis corresponding to the optical axis of the camera.

15. Process according to Claim 13, characterized in that the three vector fields
$$w(1;x,y) \;=\; (xy, \; y^2 + 1)^T$$
$$w(2;x,y) \;=\; (\,-\,(x^2 + 1), \; -\, xy)^T$$
and
$$w(3;x,y) \;=\; (y, \; -\, x)^T$$
are used as base movement vector fields, where x and y are the coordinates of points in the image plane.

**16.** Process according to Claim 14, characterized in that the six vector fields

$$w(1;x,y) = (xy, y^2 + 1)^T$$
$$w(2;x,y) = (-(x^2 + 1), -xy)^T$$
$$w(3;x,y) = (y, -x)^T$$
$$w(4;x,y) = (-1/Z(x,y), 0)^T$$
$$w(5;x,y) = (0, -1/Z(x,y))^T$$
$$w(6;x,y) = (x/Z(x,y), y/Z(x,y))^T$$

are used as base movement vector fields, where x and y are the coordinates of points in the image plane and Z(x,y) designates the object distance of an object imaged onto the pixel (x,y).

**17.** Process according to Claim 16, characterized in that, for the object distance Z(x,y), the simplifying assumption

$$Z(x,y) = \frac{l}{y}$$

is made, where x and y designate the coordinates of points in the image plane.

**18.** Process according to Claim 1, characterized in that the corrected movement vector fields are computed from the base movement vector fields and the state variables in accordance with the formula

$$\hat{V}(k;x,y) = \sum_{i=1}^{n} \hat{w}(i;k) \cdot w(i;x,y)$$

where n is the number of base movement vector fields and
$\hat{V}(k;x,y)$ designates the corrected movement vector at time k in the pixel (x,y),
$w(i;k)$ designates the i-th component of the vector of state at the time k, and
$w(i;x,y)$ designates the i-th base movement vector field in the pixel (x,y).

**19.** Process according to one of the preceding claims, characterized in that, with reference to the corrected movement vector fields, a movement-compensated image sequence is computed, e.g. with the aid of bilinear interpolation, from the sequence of images recorded by the camera.

**20.** Process according to one of the preceding claims, characterized in that a sequence of reference images is computed, e.g. with the aid of further Kalman filters, from the movement-compensated image sequence by time-recursive averaging.

**Revendications**

**1.** Procédé de segmentation d'objets mobiles dans des images enregistrées par un appareil de prise de vues, par adaptation de l'arrière-plan avec compensation du déplacement de l'appareil de prise de vues, selon lequel

a) des vecteurs de déplacement (V) sont déterminés par comparaison de deux images enregistrées successivement pour des points d'image dans une trame locale prédéterminée,

b) des vecteurs de déplacement (V) ainsi déterminés sont envoyés à un premier filtre de Kalman (KMF) pour l'estimation du déplacement de l'appareil de prise de vues, en tant que grandeurs de mesure,

c) des grandeurs d'état (w), qui décrivent l'état de déplacement de l'appareil de prise de vues, sont calculées à l'aide de ce premier filtre de Kalman,

d) sur la base de ces champs prédéterminés de vecteurs de déplacement de base (BMVF), des champs corrigés de vecteurs de déplacement $(\hat{V})$ sont calculés à partir des grandeurs d'état,

e) une suite d'images $(\hat{I})$, dans lesquelles le déplacement est compensé, est calculée à partir de ces champs corrigés de vecteurs de déplacement $(\hat{V})$,

f) une suite d'images de référence (B) est calculée à partir de la suite $(\hat{I})$ d'images, dans lesquelles les déplacements sont compensés, et

g) des objets mobiles sont segmentés par comparaison d'une image $(\hat{I})$, dans laquelle les déplacements sont compensés, avec une image de référence (B).

11

2. Procédé suivant la revendication 1, caractérisé par le fait que pour la détermination du vecteur de déplacement, une image enregistrée par l'appareil de prise de vues est comparée à une image de référence.

3. Procédé suivant l'une des revendications précédentes, caractérisé par le fait que la comparaison est exécutée par minimalisation d'une fonction de distance.

4. Procédé suivant la revendication 3, caractérisé par le fait que la courbure de la fonction de distance est mesurée au niveau du minimum et est utilisée en tant que mesure de la variance du décalage mesuré.

5. Procédé suivant la revendication 4, caractérisé par le fait que la courbe de la fonction de distance est utilisée pour le calcul de la covariance du bruit de mesure du premier filtre de Kalman.

6. Procédé suivant la revendication 3, caractérisé par le fait que la fonction de distance est formée conformément à la formule

$$D(p,v) = \sum_{x,y} wf(x-px,y-py) \ |(B(k;x,y)-I(k;x-vx,y-vy))|$$

dans laquelle x et y étant des coordonnées de points d'image, et
D(p,v) représentant la fonction de distance, qui dépend d'un vecteur de décalage v=(vx, vy) au point d'image p=(px, py),
B(k;x,y) représentant l'intensité d'image de référence à l'instant k au point d'image (x,y),
I(k;x,y) représentant l'intensité de l'image enregistrée par l'appareil de prise de vues, à l'instant k au point d'image (x,y), et
wf(x,y) étant une fonction fenêtre prédéterminée.

7. Procédé suivant la revendication 6, caractérisé par le fait que la fonction fenêtre est définie par

$$wf \ (x,y) = \begin{cases} 1 & \text{dans le cas où } |x| < Lx \quad \text{und} \quad |y| < Ly \\ 0 & \text{ailleurs} \end{cases}$$

Lx et Ly étant les dimensions d'une zone rectangulaire du plan image.

8. Procédé suivant l'une des revendications précédentes, caractérisé par le fait que les paramètres du premier filtre de Kalman, qui décrivent la dynamique du système sur lequel est basé le filtre, sont adaptés en permanence au cours du procédé, à l'aide d'une estimation autorégressive des paramètres.

9. Procédé suivant la revendication 8, caractérisé par le fait que l'adaptation des paramètres du système du premier filtre de Kalman est réalisé à l'aide de l'algorithme LMS, une norme de la différence entre des grandeurs d'état prédites et des grandeurs d'état corrigées étant choisie en tant qu'erreur de prédiction devant être minimalisée.

10. Procédé suivant la revendication 8, caractérisé par le fait que l'adaptation des paramètres du système du premier filtre de Kalman est réalisée à l'aide d'un second filtre de Kalman pour l'estimation des paramètres du système.

11. Procédé suivant l'une des revendications précédentes, caractérisé par le fait que les grandeurs d'état décrivent les mouvements de rotation de l'appareil de prise de vues.

12. Procédé suivant la revendication 11, caractérisé par le fait que les grandeurs d'état décrivent également le mouvement de translation de l'appareil de prise de vues.

13. Procédé suivant la revendication 11, caractérisé par le fait que les grandeurs d'état correspondent aux vitesses angulaires de l'appareil de prise de vues rapportées à trois axes, dont deux sont identiques aux axes de coordonnées du plan image et dont le troisième correspond à l'axe optique de l'appareil de prise de vues.

14. Procédé suivant la revendication 12, caractérisé par le fait que les grandeurs d'état correspondent aux vitesses angulaires rapportées à trois axes et aux vitesses de translation dans les directions de ces trois axes, deux axes étant identiques aux axes de coordonnées du plan image tandis que le troisième axe correspond à l'axe optique de l'appareil de prise de vues.

15. Procédé suivant la revendication 13, caractérisé par le fait qu'on utilise, comme champs de vecteurs de déplacement de base, les trois champs de vecteurs

$$w(1;x,y) = (xy, y^2 + 1)^T$$
$$w(2;x,y) = (-(x^2 + 1), -xy)^T$$

et

$$w(3;x,y) = (y, -x)^T$$

x et y étant les coordonnées de points situés dans le plan image.

16. Procédé suivant la revendication 14, caractérisé par le fait qu'on utilise comme champs de vecteurs de déplacement de base, les six champs de vecteurs

$$w(1;x,y) = (xy, y^2 + 1)^T$$
$$w(2;x,y) = (-(x^2 + 1), -xy)^T$$
$$w(3;x,y) = (y, -x)^T$$
$$w(4;x,y) = (-1/Z(x,y), 0)^T$$
$$w(5;x,y) = (0, -1/Z(x,y))^T$$
$$w(6;x,y) = (x/Z(x,y), y/Z(x,y))^T$$

x et y étant les coordonnées de points situées dans le plan image et Z(x,y) désignant la hauteur d'un objet dont l'image est formée au niveau du point image (x,y).

17. Procédé suivant la revendication 16, caractérisé par le fait que pour la hauteur Z(x,y) de l'objet, on fait l'hypothèse simplificatrice

$$Z(x,y)\frac{1}{Y}$$

x et y étant les coordonnées de points situés dans le plan image.

18. Procédé suivant la revendication 1, caractérisé par le fait que les champs corrigés de vecteurs de déplacement sont calculés à partir des champs de vecteurs de déplacement de base et des grandeurs d'état conformément à la formule

$$\hat{V}(k;x,y) = \sum_{i=1}^{n} \hat{w}(i;k) \cdot w(i;x,y)$$

n étant le nombre des champs de vecteurs de déplacement de base et

$\hat{V}(k;x,y)$ le vecteur corrigé de déplacement à l'instant k au point d'image (x,y),

$w(i;k)$ la i-ème composante du vecteur d'état à l'instant k,

$w(i;x,y)$ le i-ème champ de vecteurs de déplacement de base au point image (x,y).

19. Procédé suivant l'une des revendications précédentes, caractérisé par le fait, qu'à partir de la suite des images enregistrées par l'appareil de prise de vues une suite d'images, dans lesquels les déplacements sont compensés, est calculée, par exemple à l'aide de l'interpolation bilinéaire, sur la base des champs corrigés de vecteurs de déplacement.

20. Procédé suivant l'une des revendications précédentes, caractérisé par le fait qu'une suite d'images de référence est calculée à partir de la suite d'images, dans lesquelles les déplacements sont compensés, au moyen d'une formation de la moyenne, récursive dans le temps, par exemple à l'aide d'autres filtres de Kalman.